# EUROPEAN PATENT APPLICATION

(11) **EP 4 810 842 A1**
(43) Date of publication of application: **23.09.2026**
(21) Application number: 23958933.6
(22) Date of filing: 04.12.2023
(51) Int. Cl.: F16L 11/10

(54) **FLEXIBLE TUBE**

(30) Priority: 14.11.2023 JP 2023193665
(71) Applicant: Toyox Co., Ltd., Kurobe-shi Toyama 938-8585 (JP)
(72) Inventor: NUMATA Kenichi, Kurobe-shi, Toyama 938-8585 (JP); SHIMIZU Kazuki, Kurobe-shi, Toyama 938-8585 (JP)
(74) Representative: Gill Jennings & Every LLP
(86) International application number: PCT/JP2023/043245
(87) International publication number: WO 2025/104933

(57) **Abstract**

[Problem] Provided is a flexible tube having excellent water resistance and oil resistance and being pliable, which does not harden and become cloudy over a long period of time even when water, oil or a mixture of water and oil such as a water-soluble oil flows through the flexible tube.

[Solution] The flexible tube is a flexible tube, having a resin layer including a polyvinyl chloride resin composition which directly comes into contact with a fluid flowing through the inside thereof, wherein the polyvinyl chloride resin composition contains 55 to 85 parts by weight of plasticizers with respect to 100 parts by weight of polyvinyl chloride, and the plasticizers contain 30 to 70 parts by weight of a polyester plasticizer with a number average molecular weight of 1000 to 4000 when all the plasticizers are considered 100 parts by weight.

## Description

### TECHNICAL FIELD

The present invention relates to a flexible tube including polyvinyl chloride, having excellent water resistance and oil resistance and being pliable.

### BACKGROUND ART

Fluid conduits such as tubes and hoses used in resin molding, printing, automotive, machine tool and industrial component fields are required to have water resistance, oil resistance and chemical resistance by which water and oil can be carried for various purposes, and pliability by which the fluid conduits can be placed in various devices and facilities. Vinyl chloride resin has an excellent balance between various characteristics and costs, and soft vinyl chloride resin compositions plasticized by adding a plasticizer are extruded to form flexible tubes such as tubes and hoses, which have been used. In addition, as coolant liquids used for industrial processing machines, those obtained by diluting a water-soluble cutting oil and grinding oil with water are used in many cases and a flexible tube having both water resistance and oil resistance has been required.

As plasticizers used for the vinyl chloride resin, phthalic acid ester plasticizers such as dioctyl phthalate (DOP) and diisononyl phthalate (DINP) are common; however, these easily migrate when an oily fluid flows through a flexible tube, and the flexible tube hardens because the plasticizer comes out of the vinyl chloride resin. Therefore, there are problems in that workability becomes worse when replacing fluid conduits and load is put on devices when the flexible tube is used for a movable part in the devices. In addition, these flexible tubes usually connect devices using a joint. These are fit by insertion to a nipple having roughness on the outer periphery, and the diameter thereof is reduced by tightly clamping the outside thereof with a clamping jig to stop water in the flexible tube and joint. However, there is also a problem in that elasticity is reduced due to hardening of the flexible tube and thus tight contact with the nipple becomes worse, which causes leakage. Furthermore, there is also a problem in that the flexible tube itself becomes cloudy and loses transparency due to the migration of the plasticizer and the state of the channel cannot be visually observed from the outside.

As a method for preventing such migration of plasticizers, Patent literature 1, for example, discloses a high-flex vinyl chloride resin composition, having a vinyl chloride resin with a polymerization degree of 1700 to 4000, and combined plasticizers of 30 to 50% of a phthalic acid ester plasticizer, 30 to 50% of a trimellitic acid ester plasticizer and 10 to 40% of a polyester plasticizer added to the vinyl chloride resin, wherein the normal rate of the plasticizers is 30 to 80% and the composition contains 80 to 150 parts by weight of the plasticizers and 0.05 to 1 part by weight of a coupling agent with respect to 100 parts by weight of the vinyl chloride resin.

Patent Literature 2, for example, also discloses a flexible tube, which is produced by extruding a resin composition including a chlorine-containing resin to which at least a plasticizer is added into a tube shape in an extruder and can be used for food use, wherein the resin composition contains 60 to 80 parts by weight of an adipic acid polyester with an average molecular weight of 2000 to 4000 as the plasticizer and 0.1 to 3.0 parts by weight of a lubricant including a polymer acrylic resin with a molecular weight of 10000 to 400000 with respect to 100 parts by weight of polyvinyl chloride as the chlorine-containing resin.

Patent Literature 3, for example, also provides as an example a flexible hose for transporting food liquid, having at least one outer protective layer by a first flexible polymer material and at least one inner layer directly coming into contact with the fluid transported and produced from a second polymer material, wherein at least the second flexible polymer material contains polyvinyl chloride, at least the second polymer material contains a plasticizer having a low migration level to the extent that the flexibility of the second polymer material is substantially maintained without change over time, and the plasticizer is selected from the group consisting of non-phthalate additives so that the plasticizer will not be toxic to and contaminate food transported.

### CITATION LIST

### PATENT LITERATURE

| | |
|---|---|
| Patent Literature 1: | Japanese Patent No. 5990019 |
| Patent Literature 2: | Japanese Patent No. 5692686 |
| Patent Literature 3: | U.S. Patent No. 8057877 |

### SUMMARY OF INVENTION

### TECHNICAL PROBLEM

In the technique disclosed in Patent Literature 1 above, however, although the migration of the plasticizers due to contact with ABS resin is described, because the percentage of the polyester plasticizer, a polymeric plasticizer, contained is small, the migration of the plasticizers cannot be prevented when an oily fluid flows through a flexible tube, which causes hardening of the flexible tube.

In the technique disclosed in Patent Literature 2 above, the flexible tube containing a higher amount of the adipic acid polyester as a polymeric plasticizer is provided as an example and low migration to an oily fluid is excellent; however, because polyester plasticizers have a lower molecular weight due to hydrolysis, the plasticizer is hydrolyzed and migrates when e.g. water or a mixture of water and oil flows through the flexible tube, which causes hardening of the flexible tube. It is further disclosed that in the resin composition containing a higher amount of the polyester plasticizer with a higher molecular weight, the melt viscosity is significantly higher and moldability is reduced and thus an external lubricant is introduced; however, bonds between molecules are weakened by adding these external lubricants, leading to a partial reduction in the strength of the flexible tube.

In the technique disclosed in Patent Literature 3 above, it is described that the exudation level of the plasticizer measured in accordance with ASTM D 3291 is low by using the non-phthalate plasticizer for the inner layer and contamination properties to drinking water and irrigation water are low; however, the molecular weight of the plasticizer and oil resistance and water resistance associated with it are not described, and in a case where the molecular weight of the non-phthalate plasticizer is small, the migration of the plasticizer cannot be prevented when an oily fluid flows through the flexible tube, which causes hardening of the flexible tube. When the resin compositions forming the inner layer and outer preventive layer are different, the migration of the plasticizer as described above is caused on the inner layer, and consequently hardness between the inner layer and outer preventive layer is significantly different and a problem is developed in that peeling occurs between the layers by an operation such as bending the flexible tube.

A subject of the present invention is to deal with such problems and an object thereof is to provide a flexible tube having excellent water resistance and oil resistance and being pliable, which does not harden and become cloudy over a long period of time even when water, oil or a mixture of water and oil such as a water-soluble oil flows through the flexible tube.

### SOLUTION TO PROBLEM

As a result of repeating diligent investigations, the present inventors found that the above problems could be solved by the flexible tube of the present invention. The flexible tube of the present invention is a flexible tube, having a resin layer including a polyvinyl chloride resin composition which directly comes into contact with a fluid flowing through the inside thereof, wherein the polyvinyl chloride resin composition contains 55 to 85 parts by weight of plasticizers with respect to 100 parts by weight of polyvinyl chloride, and the plasticizers contain 30 to 70 parts by weight of a polyester plasticizer with a number average molecular weight of 1000 to 4000 when all the plasticizers are considered 100 parts by weight.

### ADVANTAGEOUS EFFECT OF INVENTION

According to the present invention, it is possible to provide a flexible tube having excellent water resistance and oil resistance and being pliable, which does not harden and peel over a long period of time even when water, oil or a mixture of water and oil such as a water-soluble oil flows through the flexible tube.

### DESCRIPTION OF EMBODIMENT

A suitable embodiment of the flexible tube of the present invention will now be described in detail. In the present embodiment, a flexible tube having a resin layer is provided as an example. The resin layer of the present embodiment is provided to directly come into contact with a fluid flowing through the inside of the flexible tube and includes a resin composition formed from polyvinyl chloride (polyvinyl chloride resin composition).

### (Polyvinyl chloride)

Polyvinyl chloride forming the resin composition has preferably an average polymerization degree of 1100 to 2700 and more preferably 1300 to 2500. When the average polymerization degree of polyvinyl chloride is within the above range, the migration of plasticizers is less and a flexible tube having excellent mechanical strength such as tensile strength and being pliable can be obtained.

### (Plasticizer)

The resin composition forming the flexible tube of the present embodiment contains preferably 55 to 85 parts by weight and more preferably 60 to 80 parts by weight of plasticizers with respect to 100 parts by weight of polyvinyl chloride. When the amount of the plasticizers contained is less than 55 parts by weight, the resin composition becomes harder and a pliable, flexible tube cannot be obtained. On the other hand, when the amount of the plasticizers contained is above 85 parts by weight, hardness easily varies due to the migration and hydrolysis of the plasticizers and a flexible tube with poor usability is obtained. Furthermore, in a multi-layer tube having a plurality of layers laminated, a problem of peeling between layers is developed by an operation such as bending a flexible tube.

The plasticizers of the present embodiment contain at least one polyester plasticizer. The amount of the polyester plasticizer contained is preferably 30 to 70 parts by weight and more preferably 40 to 60 parts by weight when all the plasticizers are considered 100 parts by weight. In a case where the percentage of the polyester plasticizer contained is less than 30 parts by weight, the plasticizer migrates when an oily fluid flows through a flexible tube, which causes hardening of the flexible tube, and therefore a pliable, flexible tube cannot be obtained. On the other hand, in a case where the percentage of the polyester plasticizer contained is above 70 parts by weight, the polyester plasticizer is hydrolyzed when an aqueous fluid such as water or a water-soluble cutting oil flows through a flexible tube, which causes hardening of the flexible tube, and therefore a pliable, flexible tube cannot be obtained. Furthermore, the melt viscosity of the resin composition becomes higher and thus it is essential to contain an external lubricant to improve moldability, which reduces the strength of the flexible tube.

The number average molecular weight of the polyester plasticizer is preferably 1000 to 4000 and more preferably 1500 to 3000. When the number average molecular weight of the polyester plasticizer is less than 1000, low molecular weight components increase in the polyester plasticizer and the migration of the plasticizer to an oily fluid increases. On the other hand, when the number average molecular weight is above 4000, high molecular weight components increase in the polyester plasticizer and compatibility with polyvinyl chloride is reduced. Furthermore, change in hardness increases due to hydrolysis and a flexible tube cannot be obtained, which does not harden and is pliable even when water or oil flows through it.

The dispersion degree, a value obtained by dividing the weight average molecular weight of the polyester plasticizer by the number average molecular weight, is preferably 1.5 to 1.9 and more preferably 1.65 to 1.75. When the dispersion degree is less than 1.5, high molecular weight components increase in the polyester plasticizer, compatibility with polyvinyl chloride is reduced and moreover change in hardness increases due to hydrolysis. On the other hand, when the dispersion degree is above 1.9, low molecular weight components increase in the polyester plasticizer and the migration of the plasticizer to an oily fluid increases. Therefore, a flexible tube cannot be obtained, which does not harden and is pliable even when water or oil flows through it.

The viscosity of the polyester plasticizer is preferably 100 to 5000 mPa•s and more preferably 2000 to 4000 mPa•s. The viscosity correlates with the molecular weight, and when the viscosity is within this range, the polyester plasticizer is a plasticizer having less volatilization and migration to oil and also less hydrolysis and a flexible tube can be obtained, which does not harden and is pliable even when water or oil flows through it. In addition, the acid value is preferably 1 or less and the hydroxy value is preferably 30 or less.

As the polyester plasticizer, a dicarboxylic acid polyester produced by a reaction of a diol component, an organic dicarboxylic acid component and a terminating agent is preferably used.

Examples of the diol component include 2-methyl-1,3-propanediol, 3-methyl-1,5-pentanediol, ethylene glycol, 1,2-propanediol, 1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 2,4-dietyl-1,5-pentanediol, 1,6-hexanediol, 1,7-heptanediol, 3,5-heptanediol, 1,8-octanediol, 2-methyl-1,8-octanediol, 1,9-nonanediol, 1,10-decanediol and the like, and 2-methyl-1,3-propanediol and 3-methyl-1,5-pentanediol are preferably used as essential components because of excellent low temperature pliability and oil resistance.

Examples of the organic dicarboxylic acid component include aliphatic dicarboxylic acids such as adipic acid, oxalic acid, malonic acid, succinic acid, glutaric acid, pimelic acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid and hydrogenated dimer acid, aromatic dicarboxylic acids such as phthalic acid, terephthalic acid, isophthalic acid, orthophthalic acid and naphthalene dicarboxylic acid, alicyclic dicarboxylic acids such as 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid and 1,4-dicarboxylmethylenecyclohexane and the like, and adipic acid is preferably used as an essential component because of excellent plasticizing efficiency and oil resistance.

The terminating agent includes a monovalent aliphatic alcohol or a monovalent aliphatic organic acid. Examples of the monovalent aliphatic alcohol include methanol, ethanol, 1-propanol, 2-propanol, butanol, 2-butanol, isobutyl alcohol, tertiary butyl alcohol, amyl alcohol, hexanol, isohexanol, heptanol, 2-heptanol, octanol, isooctanol, 2-ethylhexanol, nonanol, isononanol, decanol, isodecanol, undecanol, isoundecanol, dodecanol, benzyl alcohol, 2-butyl octanol, 2-butyl decanol, 2-hexyl octanol, 2-hexyl decanol, stearyl alcohol, 2-octyl decanol, 2-hexyl dodecanol, 2-octyl dodecanol, 2-decyl tetradecanol, tridecyl alcohol, isotridecyl alcohol and the like, and these are used individually or as a mixture of two or more. Examples of the monovalent aliphatic organic acid include formic acid, acetic acid, propionic acid, butyric acid, isobutyric acid, valeric acid, caproic acid, caprylic acid, 2-ethylhexanoic acid, pelargonic acid, capric acid, neodecanoic acid, undecanoic acid, lauric acid, tridecanoic acid, myristic acid, pentadecanoic acid, palmitic acid, margaric acid, stearic acid, coconut oil fatty acid and the like, and these are used individually or as a mixture of two or more.

Examples of plasticizers other than the polyester plasticizer include phthalate plasticizers such as dibutyl phthalate, butyl hexyl phthalate, diheptyl phthalate, dioctyl phthalate, diisononyl phthalate, diisodecyl phthalate, dilauryl phthalate, dicyclohexyl phthalate and dioctyl terephthalate; adipate plasticizers such as dioctyl adipate, diisononyl adipate, diisodecyl adipate and di(butyldiglycol)adipate; tetrahydro phthalate plasticizers, azelate plasticizers, sebacate plasticizers, stearate plasticizers, citrate plasticizers, trimellitate plasticizers, pyromellitate plasticizers, biphenylene polycarboxylic acid-based plasticizer, epoxidized linseed oil, epoxidized soybean oil and mixtures thereof and the like. Diisononyl phthalate is preferably used because a balance between e.g. compatibility with polyvinyl chloride, costs and plasticizing efficiency is excellent.

### (Additives)

The resin composition forming the flexible tube of the present embodiment can contain various additives depending on uses and methods of use. Examples of additives can include a heat stabilizer, a light stabilizer, a UV absorber, an antioxidant, an antifog agent, an antistatic agent, a flame retardant, a filler, an internal lubricant, a fluorescent agent, a germicide, a metal deactivator, a mold release agent and pigment.

### (Resin composition)

In the resin composition forming the flexible tube of the present embodiment, the IRHD hardness measured in accordance with ISO 48 is preferably 55 to 85 and more preferably 65 to 75 to provide appropriate pliability for the flexible tube.

In the resin composition forming the flexible tube of the present embodiment, the elongation measured in accordance with JIS K 6723 is preferably 380 to 460% and more preferably 410 to 430% to provide appropriate pliability for the flexible tube.

In the resin composition forming the flexible tube of the present embodiment, the tensile strength measured in accordance with JIS K 6723 is preferably 10 to 25 MPa and more preferably 15 to 20 MPa to provide appropriate pliability for the flexible tube.

### (Flexible tube)

Examples of the structure of the flexible tube of the present embodiment can include a single-layer tube including a single material, a multi-layer tube obtained by laminating a plurality of layers having different physical properties, and a hose having a reinforcement material between layers.

Examples of the above reinforcement material can include a plurality of braids or a single braid including e.g. polyester, PET, nylon (registered trademark) or aramid fiber, a monofilament including e.g. an olefin resin or a polyester resin, a multifilament obtained by braiding fine monofilaments (single fibers), flat yarn (or tape yarn) including a tape-shaped thread, a coil including a metal wire of e.g. stainless or steel, or a hard material similar to stainless, piano wire and those obtained by mixing these.

The flexible tube of the present embodiment can be used as fluid conduits for e.g. various chemical materials, chemicals, air, various gases, powder, fluid, water, oil and water-soluble oils in e.g. resin molding, printing, automotive, machine tool and industrial component fields. The flexible tube of the present embodiment does not harden and peel and maintains pliability over a long period of time even when water, oil or a mixture of water and oil such as a water-soluble oil flows through it, and thus is preferred as a hose through which water such as industrial water and cooling water, machine oils such as lubricating oil, insulating oil, wash oil, rust preventive oil, cooling oil, cutting oil, grinding oil, mineral oil and synthetic oil, and water-soluble oils obtained by adding a surfactant to these oils and diluting the obtained oils with water, and mixed drainage of water and oil particularly flow.

According to the flexible tube of the present embodiment described above, the effects described below can be obtained. That is, the flexible tube of the present invention does not harden and peel and can maintain pliability over a long period of time even when water, oil or a mixture of water and oil such as a water-soluble oil flows through it compared to conventional flexible tubes, and can be used as having much longer life than that of conventional products.

The present invention is not limited to the embodiment above and various modifications can be made without departing from the spirit thereof.

### EXAMPLES

The present invention will now be described in more detail by way of Examples and Comparative Examples thereof. It should be noted, however, that the descriptive scope of the present invention is not limited thereto. In Examples, flexible tubes of Examples 1 to 14 and Comparative Examples 1 to 6 are produced and the hardness evaluation test and the peeling evaluation test of each produced flexible tube were carried out. Examples 1 to 14 and Comparative Examples 1 to 6 will now be described.

The mixing ratios of Examples 1 to 14 are shown in Table 1 below. The mixing ratios of Comparative Examples 1 to 6 are shown in Table 2 below. It should be noted that values in Tables 1 and 2 represent parts by weight. A total of 20 flexible tubes of Examples 1 to 14 and Comparative Examples 1 to 6 were produced by forming an inner layer and an outer layer by extruding a resin composition mixed in a mixing ratio shown in Tables 1 and 2 in an extruder and placing a reinforcement layer including braids obtained by braiding a polyester thread between the inner layer and outer layer. Each produced flexible tube has an inner diameter of 19 mm and a thickness of 3.5 mm (the inner layer 1.9 mm and the outer layer 1.6 mm).

In Example 1, for example, 34 parts by weight of adipic acid polyester with a number average molecular weight of 2000 to 2500 as a polyester plasticizer and 34 parts by weight of diisononyl phthalate (DINP) as a plasticizer other than the polyester were mixed with respect to 100 parts by weight of polyvinyl chloride with a polymerization degree of 1700 as shown in Table 1. Polyvinyl chloride with a polymerization degree of 1100 in Example 11 and a polymerization degree of 2700 in Example 12 was mixed.

In Example 8, 34 parts by weight of adipic acid polyester with a number average molecular weight of 1000 to 1500 was mixed as a polyester plasticizer with respect to 100 parts by weight of polyvinyl chloride with a polymerization degree of 1700, and in Example 9, 34 parts by weight of adipic acid polyester with a number average molecular weight of 3500 to 4000 was mixed with respect to 100 parts by weight of polyvinyl chloride with a polymerization degree of 1700. It should be noted that 34 parts by weight of trioctyl trimellitate (TOTM) was mixed as a plasticizer other than the polyester in Example 10.

In Comparative Example 1, for example, 25 parts by weight of adipic acid polyester with a number average molecular weight of 2000 to 2500 as a polyester plasticizer and 25 parts by weight of DINP as a plasticizer other than the polyester were mixed with respect to 100 parts by weight of polyvinyl chloride with a polymerization degree of 1700 as shown in Table 2. In Comparative Example 6, 34 parts by weight of adipic acid polyester with a number average molecular weight of 4000 to 4500 was mixed as a polyester plasticizer with respect to 100 parts by weight of polyvinyl chloride with a polymerization degree of 1700.

**[Table 1]**

| | | | | Examples | | | | | | | | | | | | | |
|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 |
| Resin | Poly vinyl chloride | Polymerization degree | 1700 | 100 | 100 | 100 | 100 | 100 | 100 | 100 | 100 | 100 | 100 | | | 100 | 100 |
| | | | 1100 | | | | | | | | | | | 100 | | | |
| | | | 2700 | | | | | | | | | | | | 100 | | |
| Plas tici zer | | | | 68 | 56 | 82 | 68 | 68 | 68 | 68 | 68 | 68 | 68 | 68 | 68 | 68 | 68 |
| | Adipic acid polyester | Number average mole | 2000-2500 (1.70-1.75) | 34 (50 ) | 27 (50 ) | 41 (50 ) | 22 (32 ) | 28 (41 ) | 38 (56 ) | 45 (66 ) | | | 34 (50 ) | 34 (50 ) | 34 (50 ) | | |
| | | | 2000-2500 (1.55-1.60) | | | | | | | | | | | | | 34 (50) | |
| | | | 2000-2500 (1.80-1.85) | | | | | | | | | | | | | | 34 (50 ) |
| | | | 1000-1500 (1.70-1.75) | | | | | | | | 34 (50 ) | | | | | | |
| | | | 3500-4000 (1.70-1.75) | | | | | | | | | 34 (50 ) | | | | | |
| | | | 500-1000 (1.70-1.75) | | | | | | | | | | | | | | |
| | | | 4000-4500 (1.70-1.75) | | | | | | | | | | | | | | |
| | | | | 34 | 27 | 41 | 46 | 40 | 30 | 23 | 34 | 34 | | 34 | 34 | 34 | 34 |
| | DINP | | | | | | | | | | | | 34 | | | | |
| | TOTM | | | | | | | | | | | | | | | | |

| | | | | | | | | | | | | | | | | | |
|---|---|---|---|---|---|---|---|---|---|---|---|---|---|---|---|---|---|
| *Values in parentheses on parts by weight of adipic acid polyester represent parts by weight when all plasticizers are considered 100 parts by weight. | | | | | | | | | | | | | | | | | |

**[Table 2]**

| | | | | Comparative Examples | | | | | |
|---|---|---|---|---|---|---|---|---|---|
| | | | | 1 | 2 | 3 | 4 | 5 | 6 |
| Resin | Polyvinyl chloride | Polymerization degree | 1700 | 100 | 100 | 100 | 100 | 100 | 100 |
| | | | 1100 | | | | | | |
| | | | 2700 | | | | | | |
| Plast icize r | | | | 50 | 86 | 68 | 68 | 68 | 68 |
| | Adipic acid polyester | Number average molecular weight (dispersion degree) | 2000-2500 (1.70-1.75) | 25 (50) | 43 (50) | 19 (28) | 50 (73) | | |
| | | | 2000-2500 (1.55-1.60) | | | | | | |
| | | | 2000-2500 (1.80-1.85) | | | | | | |
| | | | 1000-1500 (1.70-1.75) | | | | | | |
| | | | 3500-4000 (1.70-1.75) | | | | | | |
| | | | 500-1000 (1.70-1.75) | | | | | 34 (50) | |
| | | | 4000-4500 (1.70-1.75) | | | | | | 34 (50) |
| | DINP | | | 25 | 43 | 49 | 18 | 34 | 34 |
| | TOTM | | | | | | | | |

| | | | | | | | | | |
|---|---|---|---|---|---|---|---|---|---|
| *Values in parenthesis on parts by weight of adipic acid polyester represent parts by weight when all plasticizers are considered 100 parts by weight. | | | | | | | | | |

In the hardness evaluation test and the peeling evaluation test, evaluation items, three states: (1) the initial state, (2) after leaving a flexible tube to stand for 7 days in a state in which the flexible tube is extruded, filled with No. 2 insulating oil and maintained at 60 ± 3°C, and (3) after leaving a flexible tube to stand for 6 months in a state in which the flexible tube is extruded, filled with pure water (manufactured by SEIKI Chemical Industrial Incorporated company) and maintained at 60 ± 3°C were each measured in the following methods and evaluated. The results of the evaluation tests of Examples 1 to 14 are shown in Table 3 below. The results of the evaluation tests of Comparative Examples 1 to 6 are shown in Table 4 below.

### <Hardness evaluation test>

The hardness evaluation test was carried out by measuring IRHD hardness based on ISO 48 "Rubber, vulcanized or thermoplastic -Determination of hardness-" in a micro normal rubber hardness tester MICRO-IRHD-1 manufactured by EXCEL INC. In the test, a flexible tube was cut and opened and the average hardness of 4 directions perpendicular to each other in the diameter direction of the inner surface of the channel was considered the hardness of the flexible tube, an evaluation target. The hardness was evaluated (1) in the initial state, (2) after oil filling and (3) after water filling as described below.

In the evaluation method of (1), hardness corresponds to the pliability of a flexible tube, and thus ○○ (very pliable) was used for a hardness of less than 75 degrees, ∘ (pliable) for 75 degrees or more and less than 80 degrees, Δ (slightly hard) for 80 degrees or more and less than 85 degrees and x (hard) for 85 degrees or more. For (2) and (3), ○○ was used when change in hardness relative to the hardness of (1) was less than 20%, ∘ for 20% or more and less than 25%, Δ for 25% or more and less than 30% and x for 30% or more.

### <Peeling evaluation test>

The peeling evaluation test was carried out by repeating operations of cutting each flexible tube into a length of 360 mm, feeding air from one end with another end sealed with a plug nipple, bending the flexible tube to a bending radius of 100 mm while retaining a pressure of 0.5 MPa, and returning the tube. As the evaluation method, the state of the flexible tube after being bent 20000 times at a bending speed of 30 times for a minute was verified and ○○ was used when peeling between layers did not occur and x when peeling occurred.

**[Table 3]**

| Item | State | Exam ple 1 | Exam ple 2 | Exam ple 3 | Exam ple 4 | Exam ple 5 | Exam ple 6 | Exam ple 7 | Exam ple 8 | Exam ple 9 | Exam ple 10 | Exam ple 11 | Exam ple 12 | Exam ple 13 | Exam ple 14 |
|---|---|---|---|---|---|---|---|---|---|---|---|---|---|---|---|
| Hardness evaluation | 1. Initial state | ○○ | ○○ | Δ | ○○ | ○○ | ○ | Δ | ○○ | ○ | ○○ | ○○ | Δ | ○ | ○○ |
| | 2. After oil filling | ○○ | ○○ | Δ | Δ | ○ | ○○ | ○○ | Δ | ○○ | ○○ | Δ | ○○ | ○○ | Δ |
| | 3. After water filling | ○○ | ○○ | Δ | ○○ | ○○ | ○ | Δ | ○○ | Δ | ○○ | ○ | ○○ | Δ | ○○ |
| Peeling evaluation | 2. After oil filling | ○○ | ○○ | ○○ | ○○ | ○○ | ○○ | ○○ | ○○ | ○○ | ○○ | ○○ | ○○ | ○○ | ○○ |
| | 3. After water filling | ○○ | ○○ | ○○ | ○○ | ○○ | ○○ | ○○ | ○○ | ○○ | ○○ | ○○ | ○○ | ○○ | ○○ |

**[Table 4]**

| Item | State | Comparative Example 1 | Comparative Example 2 | Comparative Example 3 | Comparative Example 4 | Comparative Example 5 | Comparative Example 6 |
|---|---|---|---|---|---|---|---|
| Hardness evaluation | 1. Initial state | x | ○○ | ○○ | Δ | ○○ | Δ |
| | 2. After oil filling | ○ | x | x | ○○ | x | ○○ |
| | 3. After water filling | ○ | x | ○○ | x | ○○ | x |
| Peeling evaluation | 2. After oil filling | - | ○○ | x | ○○ | x | ○○ |
| | 3. After water filling | - | ○○ | ○○ | x | ○○ | x |

As shown in Tables 3 and 4, it was found that the flexible tubes of Examples were pliable, and had little change in hardness and did not peel even when water or oil flowed through the flexible tubes compared to those of Comparative Examples 1 to 6. These evaluation results found that the flexible tubes of Examples were flexible tubes having excellent water resistance and oil resistance and being pliable, which did not harden and peel over a long period of time even when water, oil or a mixture of water and oil such as a water-soluble oil flowed through the flexible tubes.

The amount of the plasticizers contained was small in Comparative Example 1 and thus hardness in the initial state was above 80 degrees and pliability was significantly inferior. In the peeling evaluation, the flexible tube was not pliable and thus could not be bent 20000 times.

The amount of the plasticizers contained was high in Comparative Example 2 and thus hardness in the initial state was low and the flexible tube was pliable; however, change in hardness increased due to the migration and hydrolysis of the plasticizers, hardness became higher when water or oil flowed through the flexible tube, and pliability was significantly lost.

The amount of the polyester plasticizer contained was unbalanced in Comparative Examples 3 to 6 and thus the migration of the plasticizers to oil or hydrolysis by water were caused. Therefore, hardness became higher when water or oil flowed through the flexible tubes and pliability was significantly lost. In addition, the hardness of the inner layer became significantly higher and thus a difference in hardness between the inner layer and the outer layer was greater and the layers peeled during repeating bending.

The results could verify that the flexible tubes of Examples were flexible tubes having excellent water resistance and oil resistance and being pliable, which did not harden and peel over a long period of time even when water, oil or a mixture of water and oil such as a water-soluble oil flowed through the flexible tubes and thus could be suitably used for uses in which e.g. water such as industrial water and cooling water, machine oils such as lubricating oil, insulating oil, wash oil, rust preventive oil, cooling oil, cutting oil, grinding oil, mineral oil and synthetic oil, and water-soluble oils obtained by adding a surfactant to these oils and diluting the obtained oils with water, and mixed drainage of water and oil are allowed to flow in e.g. resin molding, printing, automotive, machine tool and industrial component fields.

## Claims

1. A flexible tube, having a resin layer including a polyvinyl chloride resin composition which directly comes into contact with a fluid flowing through an inside thereof,
wherein the polyvinyl chloride resin composition contains 55 to 85 parts by weight of plasticizers with respect to 100 parts by weight of polyvinyl chloride, and
the plasticizers contain 30 to 70 parts by weight of a polyester plasticizer with a number average molecular weight of 1000 to 4000 when all the plasticizers are considered 100 parts by weight.

2. The flexible tube according to claim 1,
wherein a polymerization degree of the polyvinyl chloride is 1100 to 2700.

3. The flexible tube according to claim 1 or 2,
wherein a dispersion degree, a value obtained by dividing a weight average molecular weight of the polyester plasticizer by a number average molecular weight, is 1.5 to 1.9.
